# EUROPÄISCHE PATENTSCHRIFT

(11) **EP 0 431 625 B1**
(45) Veröffentlichungstag und Bekanntmachung des Hinweises auf die Patenterteilung: **09.03.1994**
(21) Anmeldenummer: 90123462.5
(22) Anmeldetag: 06.12.1990
(51) Int. Cl.: H01C 7/10, H01G 4/40

(54) **Varistor hoher Kapazität**
Varistor of high capacity
Varistance de haute capacité

(30) Priorität: 07.12.1989 DE 3940557
(43) Veröffentlichungstag der Anmeldung: 12.06.1991
(73) Patentinhaber: SIEMENS AKTIENGESELLSCHAFT, 80333 München (DE); SIEMENS MATSUSHITA COMPONENTS OHG, 8530 Deutschlandsberg (AT)
(72) Erfinder: Heilmann, Joachim, Dipl.-Ing. (FH), W-8013 Haar (DE); Zödl, Heinrich, A-8530 Deutschlandsberg (AT)

(56) Entgegenhaltungen:
- DE-A- 2 546 464
- DE-A- 3 717 157
- US-A- 3 710 211
- PATENT ABSTRACTS OF JAPAN, Bd. 013, Nr. 348 (E-799)4. August 1989;& JP-A-1107512
- PATENT ABSTRACTS OF JAPAN, Bd. 013, Nr. 468 (E-834)23. Oktober 1989;& JP-A-1183803

## Beschreibung

Die Erfindung betrifft einen Varistor hoher Kapazität mit zwei Chip-Bauelementen, nämlich einem Vielschichtvaristor und einem Vielschichtkondensator, bei denen jeweils zwei gegenüberliegende Stirnflächen als metallisierte Anschlußflächen ausgebildet sind.

Varistoren sind nichtlineare spannungsabhängige Widerstände, deren Widerstandswert mit steigender Spannung abnimmt. Varistoren werden hauptsächlich als Überspannungsschutz verwendet. Aufgrund des beim Erreichen einer vorgewählten Spannung eintretenden Varistoreffekts gelingt es, den weiteren Aufbau einer Überspannung "kurzzuschließen" und die Spannung auf Werte zu begrenzen, die nur knapp über der Betriebsspannung liegen.

Die bekannten Metalloxid-Varistoren besitzen eine relativ hohe Eigenkapazität von ca. 20 nF. Aus Sicht des Überspannungsschutzes ist jedoch eine noch größere Kapazität wünschenswert, weil der resultierende Tiefpaßcharakter steile Überspannungsflanken verschleift und damit den Schutzpegel des Varistors verbessert.

Es ist bekannt, die Schutzfunktion von Varistoren, beispielsweise in Hinsicht auf Störspitzen in Kraftfahrzeugmotoren zu verbessern, indem ein Varistor und ein zusätzlicher Kondensator als bedrahtete Einzelbauelemente parallel geschaltet werden. Dieser herkömmliche Varistor hoher Kapazität ist aber aufgrund der gegenüber einem normalen Varistor verdoppelten Bestückungskosten und des verdoppelten Platzbedarfs auf der Platine noch nicht zufriedenstellend.

Ebenfalls bekannt sind Varistoren mit besonders großer Eigenkapazität, die auf einen hohen Anteil von Strontium-Titanat in der Varistorkeramik zurückzuführen ist. Auch derartige Varistoren weisen jedoch nur Kapazitäten unterhalb ca. 100 nF auf, was für eine ausreichende Glättung, beispielsweise von Störspitzen in Kfz-Motoren, nicht ausreichend ist.

Der vorliegenden Erfindung liegt daher die Aufgabe zugrunde, einen Varistor mit Kapazitäten zwischen ca. 500 und 1500 nF bereitzustellen, der nicht mehr Platz auf der Platine als ein herkömmlicher Varistor beansprucht und dessen Bestückungskosten die eines herkömmlichen Einzelvaristors nicht übersteigen.

Zur Lösung dieser Aufgabe ist der Varistor der eingangs angegebenen Art erfindungsgemäß dadurch gekennzeichnet, daß die beiden Bauelemente übereinander angeordnet und mit ihren einander zugewandten Seitenflächen miteinander verklebt sind, derart, daß ihre jeweils einen Anschlußflächen zueinander parallel liegen und mittels Lot miteinander elektrisch leitend verbunden sind.

Die metallisierten Anschlußflächen können mittels Badlöten mit einer gemeinsamen Lotschicht beschichtet sein.

Um den Varistor zu bedrahten, bietet es sich an, daß beim Varistor gemäß der ersten Lösung in das Lot das Ende eines drahtförmigen Anschlußelementes eingebettet ist.

Die Erfindung wird nachstehend anhand einer Figur, welche eine perspektivische Ansicht einer Ausführungsform gemäß der Erfindung zeigt, näher erläutert.

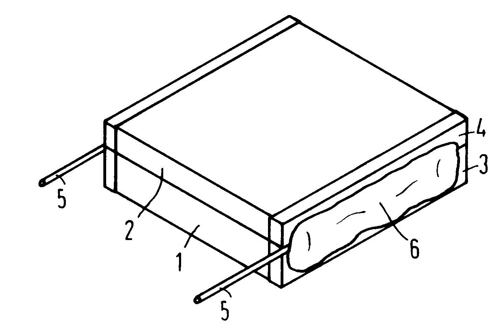

Der in der Figur schematisch dargestellte bedrahtete Varistor hoher Kapazität besteht aus zwei im Handel befindlichen üblicherweise rechteckförmigen Vielschicht-Bauelementen, nämlich einem Chip-Varistor 1 und einem Chip-Kondensator 2. Die beiden Bauelemente, die jeweils auf zwei gegenüberliegenden Stirnflächen mit verzinnten Anschlußflächen 3 bzw. 4 versehen sind, sind übereinander angeordnet und an den einander zugewandten Seitenflächen miteinander verklebt. Entscheidend ist, daß die jeweils einen übereinanderliegenden Anschlußflächen 3 bzw. 4 der beiden Bauelemente 1 und 2 zueinander parallel liegen und mittels Lot 6 miteinander elektrisch leitend verbunden sind. Dadurch können die beiden Bauelemente 1 und 2 als Einheit verlötet und beispielsweise mit Anschlußdrähten 5 versehen werden, deren Enden in das Lot 6 eingebettet sind. Besonders günstig ist es, die Anschlußdrähte 5, wie dargestellt, parallel zur Klebefläche über die ganze Länge der Anschlußflächen 3 bzw. 4 zu führen und im Lot 6 einzubetten. Der bedrahtete Varistor hoher Kapazität kann mit einer Kunststoffumhüllung versehen werden.

Es ist natürlich auch möglich, die beiden zu einer Chip-Einheit zusammengefügten Bauelemente als oberflächenmontierbaren Varistor hoher Kapazität ohne Anschlußelemente unmittelbar auf einer Platine zu verlöten, wenn die Anschlußflächen 3 bzw. 4 beispielsweise mittels Tauchlöten mit einer gemeinsamen Lötschicht beschichtet sind.

Durch die erfindungsgemäßen zusätzlichen Maßnahmen entsteht aus zwei handelsüblichen Bauelementen ein Varistor hoher Kapazität der in der bedrahteten Version ca. 30 % weniger Fläche und in der oberflächenmontierbaren Version ca. 50 % weniger Fläche auf der Platine benötigt. Ein weiterer Vorteil besteht darin, daß im Gegensatz zur herkömmlichen Lösung (zwei Bauelemente) nur ein Bauelement bestückt werden muß. Diese Halbierung der Bestückungskosten läßt sich durch die geschilderten Maßnahmen auf überraschend einfache Weise erreichen.

## Patentansprüche

1. Varistor hoher Kapazität mit zwei elektrischen Chip-Bauelementen, nämlich einem Vielschichtvaristor (1) und einem Vielschichtkondensator (2), bei denen jeweils zwei gegenüberliegende Stirnflächen als metallisierte Anschlußflächen (3, 4) ausgebildet sind,
**dadurch gekennzeichnet,**
daß die beiden Bauelemente (1, 2) übereinander angeordnet und mit ihren einander zugewandten Seitenflächen miteinander verklebt sind, derart, daß ihre jeweils einen Anschlußflächen (3, 4) zueinander parallel liegen und mittels Lot (6) miteinander elektrisch leitend verbunden sind.

2. Varistor hoher Kapazität nach Anspruch 1,
**dadurch gekennzeichnet,**
daß die metallisierten Anschlußflächen (3, 4) mittels Badlöten mit einer gemeinsamen Lotschicht beschichtet sind.

3. Varistor hoher Kapazität nach Anspruch 1,
**dadurch gekennzeichnet,**
daß in das Lot (6) das Ende eines drahtförmigen Anschlußelementes (5) eingebettet ist.

## Claims

1. High-capacitance varistor comprising two electrical chip components, namely a multilayer varistor (1) and a multilayer capacitor (2), in which two oppositely situated end faces are in each case formed as metallized terminal areas (3, 4), characterized in that the two components (1, 2) are disposed one on top of the other and are bonded together by their mutually adjacent lateral faces in such a manner that their terminal areas (3, 4) are in each case singly situated in parallel with one another and are connected together in an electrically conducting manner by means of solder (6).

2. High-capacitance varistor according to Claim 1, characterized in that the metallized terminal areas (3, 4) are coated with a common solder layer by means of bath soldering.

3. High-capacitance varistor according to Claim 1, characterized in that the end of a wire-type terminal element (5) is embedded in the solder (6).

## Revendications

1. Varistor à haute capacité à deux composants électriques à puce, à savoir un varistor multicouches (1) et un condensateur multicouches (2), dans lesquels sont formées respectivement deux faces frontales opposées en tant que faces métallisées de raccordement (3, 4),
caractérisé en ce que les deux composants (1, 2) sont disposés l'un au-dessus de l'autre, et leurs faces opposées sont collées ensemble de telle sorte que leurs premières faces de raccordement (3, 4) sont parallèles entre elles et qu'elles sont reliées ensemble de manière électriquement conductrice au moyen de soudure (6).

2. Varistor à haute capacité suivant la revendication 1,
caractérisé en ce que les faces métallisées de raccordement (3, 4) sont recouvertes, au moyen de soudure au bain, d'une couche de soudure commune.

3. Varistor à haute capacité suivant la revendication 1,
caractérisé en ce que l'extrémité d'un élément de raccordement en forme de fil (5) est noyée dans de la soudure (6).
